# EUROPÄISCHE PATENTSCHRIFT

(11) **EP 3 063 026 B1**
(45) Veröffentlichungstag und Bekanntmachung des Hinweises auf die Patenterteilung: **14.06.2017**
(21) Anmeldenummer: 14786214.8
(22) Anmeldetag: 20.10.2014
(51) Int. Cl.: B60H 1/34

(54) **LUFTDÜSE**
AIR NOZZLE
DIFFUSEUR D'AIR

(30) Priorität: 30.10.2013 DE 102013111982; 04.02.2014 DE 102014101315
(43) Veröffentlichungstag der Anmeldung: 07.09.2016
(73) Patentinhaber: Dr. Schneider Kunststoffwerke GmbH, 96317 Kronach-Neuses (DE)
(72) Erfinder: SCHNEIDER, Johannes, 96328 Küps (DE)
(74) Vertreter: Pröll, Jürgen
(86) Internationale Anmeldenummer: PCT/EP2014/072443
(87) Internationale Veröffentlichungsnummer: WO 2015/062890

(56) Entgegenhaltungen:
- DE-A1- 10 323 522
- FR-A1- 2 671 520
- JP-A- 2009 160 981
- US-A1- 2008 081 550
- US-A1- 2010 304 655

## Beschreibung

Die vorliegende Erfindung betrifft einen Luftausströmer mit den Merkmalen des Patentanspruches 1.

Luftausströmer zum Einsatz in Kraftfahrzeugen sind hinlänglich bekannt. Derartige Luftausströmer weisen zumeist separate und um einen Winkel gegeneinander angeordnete Lamellenblöcke auf, mittels welcher der Luftstrom, der in den Luftausströmer eingeleitet wird, gesteuert und in seiner Orientierung gerichtet werden soll. Ein Lamellenblock ist hierbei so angeordnet, dass er den Luftausströmer zum Innenraum des Kraftfahrzeugs hin begrenzt.

Aus DE 10 2004 046 059 ist eine Luftdüse mit Lamellen mit mindestens einem, über einen Antrieb bedienbaren Stellelement zur Regelung des Luftstroms, insbesondere für ein Belüftungssystem eines Kraftfahrzeugs bekannt. Das Stellelement weist eine Vielzahl von Lamellen auf. Über einen Antrieb des Stellelements ist mindestens ein weiteres Stellelement betätigbar.

Aus DE 10 2007 061 576 A1 ist eine Luftdüse bekannt, die mit mindestens einer einen Drall erzeugenden Leitfläche versehen ist. Es ist außerdem eine Blende mit einer Mehrzahl nebeneinander angeordneter Drallerzeuger angeordnet.

Aus DE 41 36 822 A1 ist eine Luftausströmvorrichtung für den Innenraum eines Kraftfahrzeuges bekannt. Die Luftausströmvorrichtung weist eine mit Luftleitelementen ausgerüstete Belüftungsdüse und eine dieser stromab zugeordneten Blende auf, mit über Stege getrennten, schlitzartigen Austrittsöffnungen. Die Luftleitelemente sind an der um eine Drehachse bewegbaren Belüftungsdüse angeordnet und diese ist derart mit einem Schrittgetriebe einer Betätigungseinrichtung in Antriebsverbindung verbunden, dass in jeder gewählten Ausströmrichtung die Luftleitelemente mit benachbarten Stegen der Blende fluchten.

Aus DE 100 36 776 A1 ist eine Einrichtung zur Klimatisierung eines Innenraumes, insbesondere eines Fahrzeuginnenraums, mit einem Klimagerät mit einer Klimaluft-Führung, sowie mit einem Luftheizgerät (3) mit einer Heizluft-Führung bekannt. Die Klimaluft-Führung und die Heizluft-Führung sind mit dem Innenraum verbunden. Die Klimaluft-Führung und die Heizluft-Führung sind über ein Mündungsstück in Form einer Doppeldüse zusammengeführt, die ein Innenrohr und ein konzentrisches Außenrohr aufweist und insbesondere als Doppeldüse nach dem Strahldüsenprinzip und/oder nach dem Drallströmungsprinzip aufgebaut ist.

Aus DE 10 2007 019 602 B3 ist ein Luftausströmer mit einem Düsengehäuse, einer in axialer Richtung zum Düsengehäuse befindlichen Lufteintrittsöffnung und einer der Lufteintrittsöffnung im Wesentlichen gegenüberliegenden Luftaustrittsöffnung bekannt. Es ist ein kegelförmiges Luftleitelement vorhanden, wobei das Luftleitelement mit einer Längsachse in axialer Richtung zum Düsengehäuse angeordnet ist und das Luftleitelement mit seiner Spitzseite zur Luftaustrittsöffnung hin angeordnet ist. Das Luftleitelement weist eine in seiner Längsachse befindliche durchgängige Öffnung auf. Weiterhin ist ein Manipulator vorgesehen, der zur Aufnahme der durchgängigen Öffnung des Luftleitelements vorgesehen ist. Das Düsengehäuse und das Luftleitelement dienen zur Erzeugung des Coanda-Effekts.

Aus DE 197 39 652 A1 ist eine Belüftungseinrichtung mit einem Gehäuse, das einen Einströmbereich, in welchen ein Luftkanal mündet, und einen Ausströmbereich aufweist, in welchem eine Luftleiteinrichtung und eine Drosseleinrichtung vorgesehen sind, bekannt. Über Bedienungselemente sind die Luftleiteinrichtung und die Drosseleinrichtung verstellbar. Die Drosseleinrichtung weist zwei Drosselelemente auf, die relativ zueinander beweglich sind. Durch ein Bewegen der Drosselelemente relativ zueinander ist es möglich, den Austrittsquerschnitt zu variieren, ohne dass sich die Strömungsrichtung der austretenden Luft verändert.

US 2010/0304655 A1 offenbart einen Luftausströmer mit V-förmig ausgebildeten und gegenüberliegenden Bereichen, die in einen Luftaustrittsbereich ragen.

JP 2009 160981 A offenbart ebenfalls einen Luftausströmer mit V-förmigen Bereichen, die in einen Luftaustrittsbereich des Luftausströmers ragen.

Nachteilig bei dem bekannten Stand der Technik ist, dass die bekannten Luftausströmer, bedingt durch die Lamellenblöcke, die in der Frontseite eingelassen sind, eine gewisse Dimensionierung und Größe aufweisen.

Der vorliegenden Erfindung liegt daher die Aufgabe zu Grunde, einen Luftausströmer aufzuzeigen, dessen Luftleit- und Luftablenkelemente im Gehäuse angeordnet und von außen kaum erkennbar sind und der Luftausströmer lang und gestreckt ausgestaltet ist. In einer weiteren vorteilhaften Ausgestaltung der Erfindung soll in der Luftaustrittsöffnung ein Element fest angeordnet sein, das zugleich einen Teil der Luftaustrittsöffnung bildet.

Diese Aufgabe wird anhand der Merkmale des Patentanspruches 1 gelöst.

Vorteilhafte Ausgestaltungen der Erfindung sind in den Unteransprüchen, in der weiteren Beschreibung und in konkreten Ausführungsbeispielen dargestellt.

Ein erfindungsgemäßer Luftausströmer weist mindestens eine Öffnung zur Zuführung eines Luftstroms und mindestens eine Öffnung zur Ausleitung des zugeführten Luftstroms auf. Es ist mindestens eine Anordnung zur Führung und/oder Ablenkung und/oder Unterbindung des zugeführten Luftstroms vorhanden, wobei der Luftstrom dem Luftausströmer aus einem Luftzufuhrschacht oder aus einer Luftzufuhrleitung in Heizungs-, Lüftungs- oder Klimaanlagen, insbesondere für Fahrgasträume in Kraftfahrzeugen, zuführbar ist, wobei der Luftausströmer aus einem Gehäuse besteht, das in einen Wanddurchbruch einsetzbar oder hinter einem solchen montierbar ist. In der Öffnung zur Ausleitung des Luftstromes ist mindestens ein Element angeordnet und die Anordnung zur Führung und/oder Ablenkung und/oder Unterbindung des zugeführten Luftstroms ist im Innern des Gehäuses hinter dem mindestens einen Element angebracht. Weiterhin laufen eine Gehäuseoberseite und eine Gehäuseunterseite im Bereich der Öffnung V-förmig aus, indem Innenflächen im Bereich der Öffnung in Richtung einer Außenkante der Öffnung ansteigen und dann nach außen abfallen. Oberhalb und unterhalb, äquidistant zum mindestens einen Element ist jeweils eine feststehende Lamelle angeordnet.

Die Orientierung des aus der Luftaustrittsöffnung des Luftausströmers austretenden Luftstromes erfolgt über Luftleitelemente im Innern bzw. innerhalb des Gehäuses des Luftausströmers. Durch diese Ausgestaltung der Ablenkung bzw. Orientierung des Luftstromes, vorzugsweise innerhalb des Gehäuses, kann die Luftaustrittsöffnung des Luftausströmers frei gestaltet werden. Durch den V-förmigen Auslauf der Gehäuseoberseite und der Gehäuseunterseite im Bereich der Öffnung wird die ausströmende Luft zusätzlich gerichtet.

In einer vorteilhaften Ausgestaltung der Erfindung nach Patentanspruch 2 ist vorgesehen, dass das mindestens eine Element starr in der Öffnung zur Ausleitung des Luftstromes angeordnet ist und nahezu bündig mit zwei einander gegenüberliegenden, die Öffnung zur Ausleitung des Luftstromes umschließenden Flächen des Gehäuses abschließt. Zum einen ermöglicht dies, das Element flach, das Gehäuse langestreckt und die Gehäusewände dünn auszugestalten und dennoch dem Gehäuse die notwendige Steifigkeit und Stabilität zu geben.

In einer vorteilhaften Ausgestaltung der Erfindung nach Patentanspruch 3 ist vorgesehen, dass das mindestens eine Element in horizontaler Richtung verschiebbar in der Öffnung zur Ausleitung des Luftstromes angeordnet ist und nahezu bündig mit den beiden einander gegenüberliegenden, die Öffnung seitlich umschließenden Seitenflächen des Gehäuses abschließt. Das verschiebbare Element ist für das Steuern des Luftstromes in der horizontalen Richtung, d.h. nach rechts oder links, maßgebend. Für das Verschließen der Luftausströmöffnung nach oben oder unten ist ein Verstellelement erforderlich, z. B. ein vertikal angeordnetes Bedienrad an der Seite, so dass der Luftstrom in gerichteter Weise entweder aus der oberen oder der unteren verbleibenden Öffnung ausströmen kann. Durch eine zusätzliche Ausgestaltung der oberen und unteren Gehäusekanten, z.B. in Lamellenform, kann der austretende Luftstrom, trotz feststehendem Element, variiert und gerichtet geleitet werden.

In einer vorteilhaften Ausgestaltung der Erfindung nach Patentanspruch 4 ist vorgesehen, dass die Anordnung mindestens aus zwei separaten und um einen Winkel gegeneinander versetzt und/oder hintereinander angeordneten Elementen besteht, so dass der aus der Öffnung zur Ausleitung des Luftstroms austretende Luftstrom in seiner Strömungsrichtung einstellbar, ablenkbar oder nahezu vollständig unterbindbar ist, wobei die Elemente aus mindestens einer Lamelle oder einem Lamellenblock bestehen, wobei der Lamellenblock mehrere miteinander gekoppelte Lamellen aufweist und wobei eine jede der miteinander gekoppelten Lamellen eines Lamellenblocks im Lamellenblock derart gelagert ist, dass die Lamellen eines Lamellenblocks gemeinsam um eine Achse verschwenkbar sind. Durch die Anordnung, die aus mindestens zwei separaten Elementen besteht, die versetzt zueinander oder hintereinander angeordnet sind, kann der Luftstrom im Gehäuse gerichtet und/oder in seiner Strömungsintensität beeinflusst, d.h. verringert werden.

In einer vorteilhaften Ausgestaltung der Erfindung nach Patentanspruch 5 ist vorgesehen, dass sich der V-förmige Verlauf im Bereich der Öffnung über die gesamte Frontseite des Gehäuses erstreckt.

In einer vorteilhaften Ausgestaltung der Erfindung nach Patentanspruch 6 ist vorgesehen, dass die Öffnung die Oberfläche eines Kreiszylinderabschnittes, konkav zum Innenraum des Gehäuses, abbildet.

In einer vorteilhaften Ausgestaltung der Erfindung nach Patentanspruch 7 ist vorgesehen, dass das mindestens eine Element eine Lamelle, ein an einer Seite abgeflachter Kreiszylinder oder ein Quader ist.

In einer vorteilhaften Ausgestaltung der Erfindung nach Patentanspruch 8 ist vorgesehen, dass die jeweils eine feststehende Lamelle in das Gehäuse zurückgesetzt angeordnet ist.

In einer vorteilhaften Ausgestaltung der Erfindung nach Patentanspruch 9 ist vorgesehen, dass die Innenflächen der Gehäuseoberseite und der Gehäuseunterseite im Bereich des in der Öffnung angeordneten, mindestens einen Elements die Form des mindestens einen Elements zumindest teilweise aufnehmen. Durch diese Formgebung der Innenflächen erfolgt eine Beeinflussung des austretenden Luftstromes, der durch diese Formgebung in seiner Ausströmrichtung beeinflussbar ist.

Besonders vorteilhaft bei der Ausgestaltung eines Luftausströmers mit rundem Gehäuse ist, dass die Nebenkanäle

bzw. Beipässe, die für die Luftablenkung nach oben oder nach unten verantwortlich sind, auch für die Spotbelüftung (gerade) mit genutzt werden, damit der zulässige Druckverlustwert im Belüftungssystem nicht überschritten wird. Die beiden entgegen gerichteten Luftströme, von oben oder von unten, heben sich gegenseitig auf, d. h. der Gesamtstrom wird nicht diffus, sondern er bleibt konzentriert erhalten.

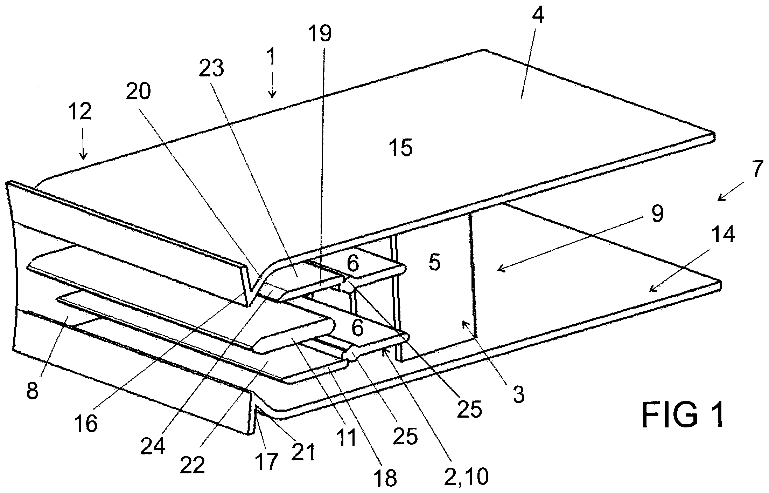

Nachfolgend wird die Erfindung anhand konkreter Ausführungsbeispiele anhand der Figuren FIG 1 bis FIG 19 beschrieben.

Diese Beschreibung anhand der konkreten Ausführungsbeispiele stellt keine Limitierung der Erfindung auf eines dieser konkreten Ausführungsbeispiele dar. Jedes konkrete Ausführungsbeispiel zeigt die Erfindung anhand einer Ausführungsform eines Luftausströmers für ein Kraftfahrzeug.

Es werden in den Figuren und in der Figurenbeschreibung gleichen Elementen gleiche Bezugszeichen zugewiesen. Dies dient der besseren Übersichtlichkeit und Verständlichkeit der Erfindung.

Es zeigen:
- FIG 1: einen Luftausströmer in einer perspektivischen Schnittdarstellung;
- FIG 2: einen Längsschnitt durch einen Luftausströmer;
- FIG 3: einen Längsschnitt durch einen Luftausströmer mit einer schematisch dargestellten Luftströmung;
- FIG 4: einen Längsschnitt durch einen Luftausströmer;
- FIG 5: einen Längsschnitt durch einen Luftausströmer mit einer schematisch dargestellten Luftströmung;
- FIG 6 bis FIG 8: Schnitte durch schematisch dargestellte Luftausströmer;
- FIG 9: eine perspektivische Darstellung eines Luftausströmers;
- FIG 10: einen Luftausströmer in einer perspektivischen Schnittdarstellung;
- FIG 11: einen Längsschnitt durch einen Luftausströmer;
- FIG 12 und FIG 14: jeweils einen Längsschnitt durch einen Luftausströmer mit einer schematisch dargestellten Luftströmung;
- FIG 13: einen Längsschnitt durch einen Luftausströmer;
- FIG 15: eine perspektivische Darstellung eines Luftausströmers;
- FIG 16: einen Luftausströmer in einer perspektivischen Schnittdarstellung;
- FIG 17: eine Frontansicht eines Luftausströmers;
- FIG 18: einen Längsschnitt durch einen Luftausströmer, und
- FIG 19: einen Längsschnitt durch einen Luftausströmer mit einer schematisch dargestellten Luftströmung.

In FIG 1 ist ein Luftausströmer in einer perspektivischen Schnittdarstellung dargestellt. Der Luftausströmer 1 besteht aus einem Gehäuse 4 mit der in FIG 1 dargestellten Gehäuseseitenfläche 12, der Gehäuseoberseite 15 und der Gehäuseunterseite 14. Aufgrund der Schnittdarstellung ist die Gehäuseseitenfläche 13 des Gehäuses 4 nicht dargestellt. Das Gehäuse 4 weist eine Öffnung 7 auf, über welche ein Luftstrom zuführbar ist, sowie mindestens eine Öffnung 8, aus welcher der zugeführte Luftstrom aus dem Luftausströmer 1 ausgeleitet wird. Im Gehäuse 4 des Luftausströmers 1 ist eine Anordnung 2, 3 vorgesehen, welche dazu dient, den in den Luftausströmer 1 eingeleiteten Luftstrom in seiner Orientierung auszurichten. In der Ausführung gemäß FIG 1 handelt es sich um Lamellen 5, 6, die in einer vorteilhaften Ausgestaltung zu Lamellenblöcken 9, 10 oder jeweils mindestens einem Lamellenblock zusammengefasst sind. Die Lamellen 5; 6 eines Lamellenblocks 9; 10 lassen sich einzeln oder gemeinsam im Lamellenblock 9; 10 verschwenken. In der Luftausströmöffnung 8 ist ein Element 11 angeordnet, das in FIG 1 in Form einer Lamelle ausgestaltet ist. Das Element 11 ist vorzugsweise mittig in der Öffnung 8 angeordnet und erstreckt sich über die gesamte Breite der Öffnung 8. Oberhalb und unterhalb des Elements 11 sind zwei feststehende und ebenfalls nicht verschwenkbare Lamellen 18, 19 angeordnet. Diese Lamellen 18, 19 sind an den Seitenwänden 12, 13 des Gehäuses 4 angebunden, wobei die Lamellen 18, 19 gegenüber dem Element 11 in das Gehäuse 4 zurückversetzt sind. Das Element 11 schließt an der Vorderseite nahezu bündig mit der Front des Luftausströmers 1 ab. An den beiden feststehenden Lamellen 18, 19 sind die Lamellen 6 der Anordnung 2 schwenkbar um die Längsachse der Lamellen 18, 19 angeordnet. Die Lamellen 5 bilden einen Lamellenblock 9, die Lamellen 6 einen Lamellenblock 10.

Die Lamellen 18, 19 sind in ihrer Form und Dimensionierung gleich und sind in Form eines geraden Prismas ausgestaltet, das im Bereich der Öffnung 8 einen keilförmigen Bereich 24 ausbildet. Vorzugsweise weisen die Lamellen 18, 19 eine glattflächige Seite 22, eine prismenförmige Oberseite 23 und den Keilbereich 24 ausformende Frontseite auf. Die Lamellen 18, 19 sind im Gehäuse 4 mit den beiden glattflächigen Seiten 22, die vorzugsweise glatteben-flächig sind, einander zugewandt angeordnet.

Die Frontseite des Gehäuses 4 weist einen V-förmigen Verlauf 16, 17 auf. Die obere und die untere Gehäuseseite 15, 14 bilden Innenflächen 20, 21 im Bereich der Öffnung 8 aus, die in Richtung der Außenkante der Öffnung 8 ansteigen und dann nach außen abfallen, so dass sich eine charakteristische V-Form ausbildet, die eine Luftstromabrisskante bildet. Durch die Steilheit der Luftabrisskante wird der Luftstrom, der aus der Öffnung 8 austritt, gerichtet und geführt.

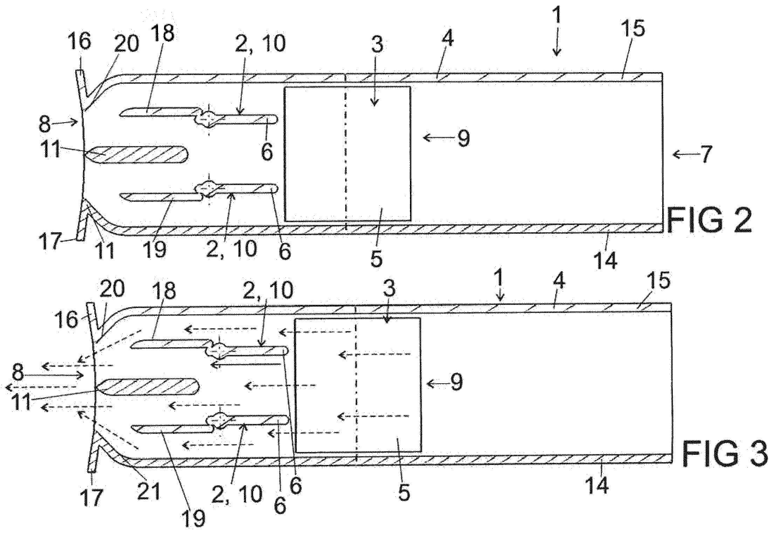

In FIG 2 ist ein gerader Schnitt durch den Luftausströmer 1 von FIG 1 dargestellt. Der Schnitt erfolgt längs durch das Gehäuse 4 des Luftausströmers 1, das eine quaderförmige Form aufweist. Am hinteren Ende des Gehäuses 4 ist die Öffnung 7 zur Zuführung eines Luftstroms und an der Frontseite die Öffnung 8 zur Ausleitung des Luftstroms dargestellt. In der Luftaustrittsöffnung 8 ist das Element 11 in Form einer Lamelle zentral mittig und fest angeordnet. Oberhalb und unterhalb sind die Lamellen 18, 19 angeordnet. An den Lamellen 18, 19 sind die Lamellen 6 über ein Gelenk 25 angelenkt. Das Gelenk 25 ist ein Drehgelenk. Hinter dem Lamellenblock 10 ist der Lamellenblock 9, bestehend aus den Lamellen 5, im Gehäuse 4 angeordnet. Der Luftstrom, der durch den Luftausströmer 1 geführt wird, ist in seiner Orientierung in horizontaler und/oder vertikaler Richtung mittels der Lamellen 5, 6 ablenkbar. Die Lamellen 18, 19 und das Element 11, in Verbindung mit dem V-förmigen Gehäuseverlauf 16, 17, beeinflussen die Orientierung des Luftstromes zusätzlich.

In FIG 3 ist der Luftstrom, der durch den Luftausströmer 1 gemäß FIG 2 geführt wird, mit gestrichelten Pfeilen eingezeichnet. Es ist dargestellt, dass die Lamellen 5, 6 in ihrer in FIG 3 dargestellten Ausrichtung den Luftstrom nicht beeinflussen. Die Ablenkung und Orientierung des Luftstromes erfolgt nur durch das Zusammenspiel der Lamellen 18, 19, dem V-förmigen Gehäuseverlauf 16, 17 und der Anordnung des Elements 11.

Der die Lamelle 18 oben umströmende Luftstrom wird über die Lamelle 18 und den V-förmigen Gehäuseverlauf 16 nach unten abgelenkt, der die Lamelle 19 unten umströmende Luftstrom wird über die Lamelle 19 und den V-förmigen Gehäuseverlauf 17 nach oben abgelenkt; der das Element 11 umströmende Luftstrom tritt nahezu gerade nach vorne gerichtet aus der Öffnung 8 aus.

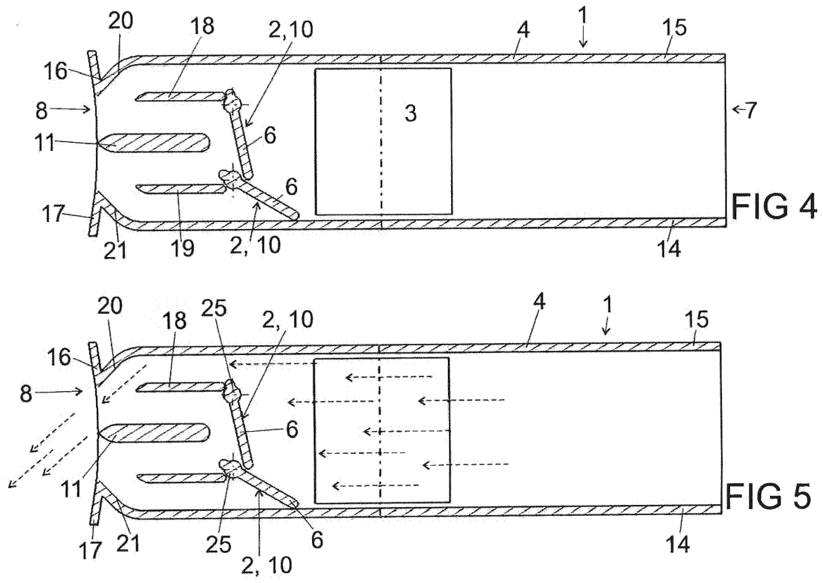

In FIG 4 sind, entgegen der Darstellung in FIG 2, die Lamellen 6 so eingestellt, dass ein über die Öffnung 7 eintretender Luftstrom nur über die dann noch vorhandene Öffnung oberhalb der Lamelle 18 austreten kann.

In FIG 5 ist der Luftstrom, der durch den Luftausströmer 1 gemäß FIG 4 geführt wird, mit gestrichelten Pfeilen eingezeichnet. Der über die Öffnung 7 eintretende Luftstrom kann nur oberhalb der Lamelle 18 verlaufen und so geführt aus der Öffnung 8 austreten. Dieser Luftstrom wird durch die Lamelle 18 und den V-förmigen Gehäuseverlauf 16 nach unten abgelenkt.

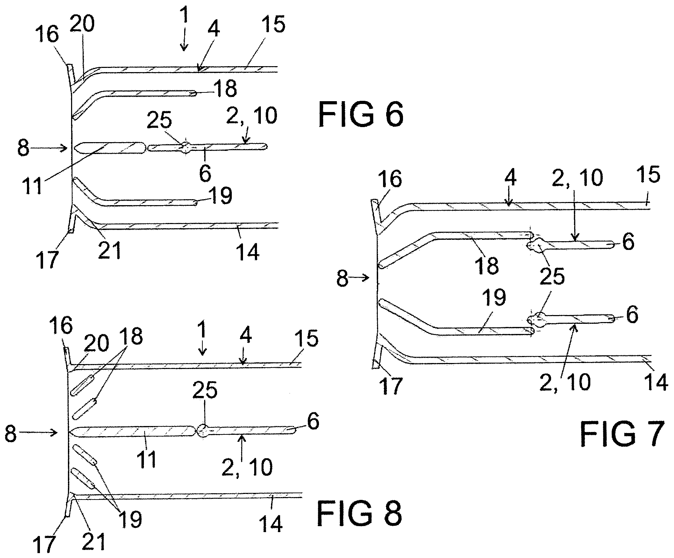

In FIG 6 ist eine weitere Ausgestaltung und Anordnung der Lamellen 18 und 19 im Gehäuse 4 des Luftausströmers 1 dargestellt. Die Lamellen 18 und 19 sind fest im Gehäuse 4 angeordnet und schließen mit dem Element 11, das ebenfalls fest angeordnet ist, nahezu plan in der Öffnung 8 ab. Die Lamelle 18 verläuft parallel zur Gehäuseoberseite 15 und die Lamelle 19 verläuft parallel zur Gehäuseunterseite 14. Die Lamellen 18, 19 nehmen im vorderen Bereich den Verlauf der der Lamelle 18, 19 nächstliegenden Innenfläche 20, 21 auf.

Die Lamelle 6 ist hinter dem Element 11 angeordnet. Die Lamelle 6, es können auch mehrere Lamellen 6 einen Lamellenblock 10 bilden, der in analoger Weise hinter dem Element 11 angeordnet ist, sind wiederum vorhanden. Die Lamelle 6 ist in einer vorteilhaften Ausgestaltung mit dem Element 11 verbunden bzw. an diesem angebunden. Die Lamelle 6 weist ein Gelenk 25 auf, um das die Lamelle 6 um ihre Längsachse verschwenkbar ist. Die Lamelle 6 ist in der Dimensionierung so gewählt, dass die Lamelle 6 in nach oben verschwenkter Einstellung das Gehäuse 4 oberhalb des Elements 11 verschließt und die Lamelle 6 in nach unten verschwenkter Einstellung das Gehäuse 4 unterhalb des Elements 11 verschließt; Zwischeneinstellungen sind möglich.

In FIG 7 ist eine weitere Ausgestaltung und Anordnung der Lamellen 18 und 19 im Gehäuse 4 des Luftausströmers 1 dargestellt. In FIG 7 entfällt das Element 11 und eine Lamelle 6 ist jeweils über ein Gelenk 25 an den Lamellen 18, 19 angelenkt. Die Lamellen 6 sind gemeinsam verschwenkbar, wobei die Verschwenkung parallel oder gegenläufig erfolgen kann.

In FIG 8 ist eine weitere Ausgestaltung und Anordnung der Lamellen 18 und 19 im Gehäuse 4 des Luftausströmers 1 dargestellt. Es ist das Element 11 mittig in der Öffnung 8 des Luftausströmers 1 angeordnet. Oberhalb des Elements 11 sind paarig zwei Lamellen 18 und unterhalb des Elements 11 ebenfalls paarig zwei Lamellen 19 angeordnet. Die Lamellen 18, 19 sind relativ kurz und in einem spitzen Winkel zum Element 11 angeordnet. Hinten am Element 11 ist ein Gelenk 25 vorhanden, an dem die Lamelle 6 zur Veränderung und Ablenkung des Luftstromes im Gehäuse 4 angeordnet ist.

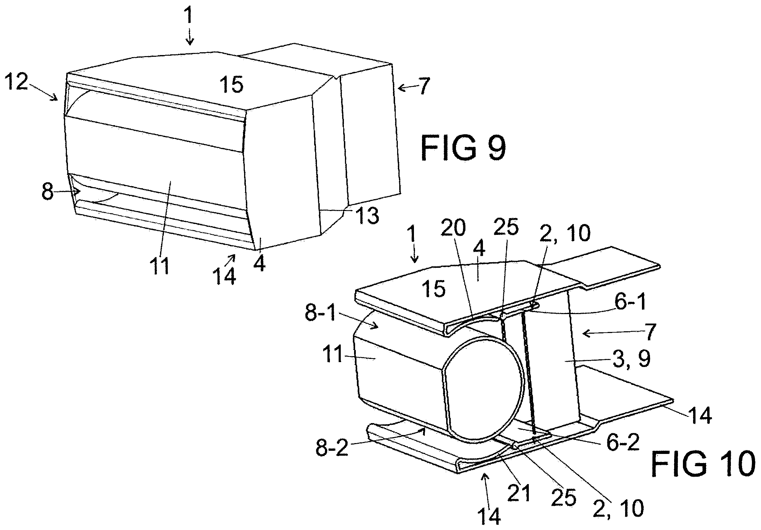

In FIG 9 ist ein weiterer Luftausströmer 1 dargestellt. Es ist ein feststehendes Element 11, das in der Ausführung gemäß FIG 9 als einseitig abgeflachte Walze oder als ein an einer Seite abgeflachter Rundzylinder ausgestaltet ist, mittig in der Öffnung 8 angeordnet. Das Element 11 ist fest in der Luftaustrittsöffnung 8 angeordnet.

In einer besonders vorteilhaften Ausgestaltung der Erfindung ist das Element 11 vertikal verschiebbar und kann zwischen der Gehäuseoberseite 15 und der Gehäuseunterseite 14 des Gehäuses 4 verschoben und dann in einer gewählten Stellung arretiert werden.

Bei mittiger Anordnung des Elements 11 in der Öffnung 8 des Gehäuses 4 verbleiben in der Öffnung 8 zwei Öffnungen 8-1, 8-2, über welche ein Luftstrom austreten kann. Das Gehäuse 4 ist im Prinzip quaderförmig ausgestaltet, weist jedoch eine Verjüngung in Richtung der Lufteintrittsöffnung 7 auf.

In FIG 10 ist ein perspektivischer Schnitt durch den Luftausströmer 1 gemäß FIG 9 dargestellt. Es ist dargestellt, dass das Element 11 eine walzenförmige Ausgestaltung oder eine rundzylindrische Form mit einer abgeflachten Front aufweist. Im Weiteren sind die Anordnungen 2, 3, die wiederum Lamellen 5, 6-1, 6-2 oder Lamellenblöcke 9, 10 sein können, vorhanden und dienen zur Lenkung des Luftstroms. Die Innenflächen 20, 21 der Gehäuseoberseite 15 und der Gehäuseunterseite 14 nehmen den Radius des Zylinders des Elements 11 auf. Die Lamellen 6-1, 6-2 sind an Gelenken 25, die an den Enden der Innenflächen 20, 21 angeordnet sind, angebunden. In einer Stellung liegen die Lamellen 6-1, 6-2 parallel zu der Gehäuseoberseite 15 und der Gehäuseunterseite 14. Wird die obere Lamelle 6-1 nach unten verschwenkt, so wird die obere Öffnung 8-1 verschlossen; wird die untere Lamelle 6-2 nach oben verschwenkt, so wird die untere Öffnung 8-2 verschlossen.

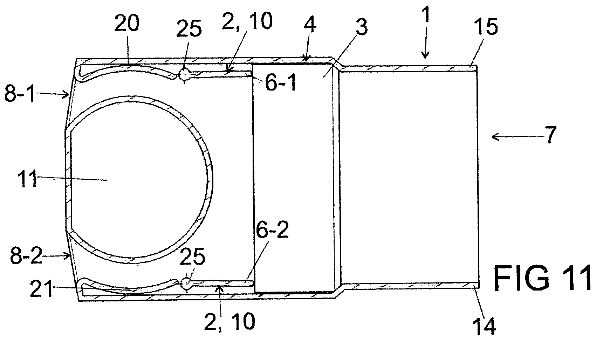

In FIG 11 ist ein Längsschnitt durch den Luftausströmer gemäß FIG 9 dargestellt. Beide Lamellen 6-1 und 6-2 sind parallel zur Gehäuseoberseite 15 und zur Gehäuseunterseite 14 ausgelenkt.

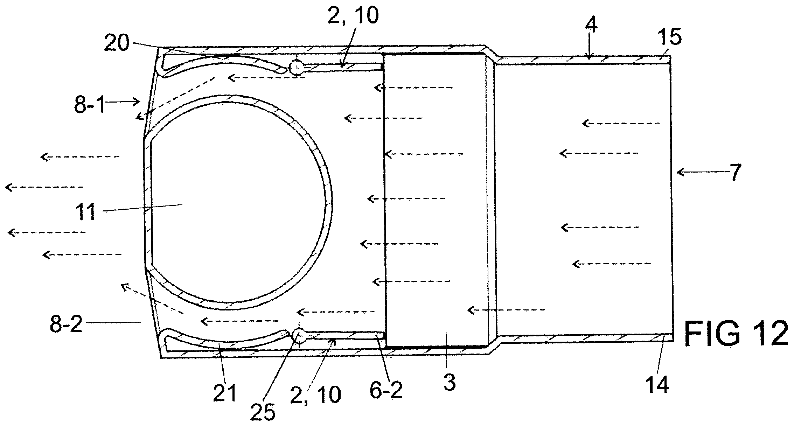

In FIG 12 ist der Luftstrom, der durch den Luftausströmer 1 gemäß FIG 11 geführt wird, mit gestrichelten Pfeilen dargestellt. Der Luftstrom tritt über die Öffnungen 8-1 und 8-2 aus und verläuft nahezu linear.

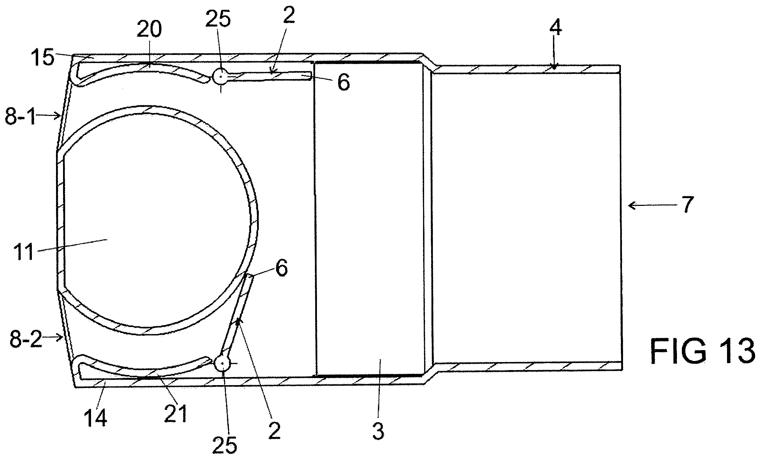

In FIG 13 ist der Luftstrom im Luftausströmer 1 von FIG 11 dargestellt, jedoch ist die untere Lamelle 6-2 nach oben verschwenkt und verschließt die Öffnung 8-2.

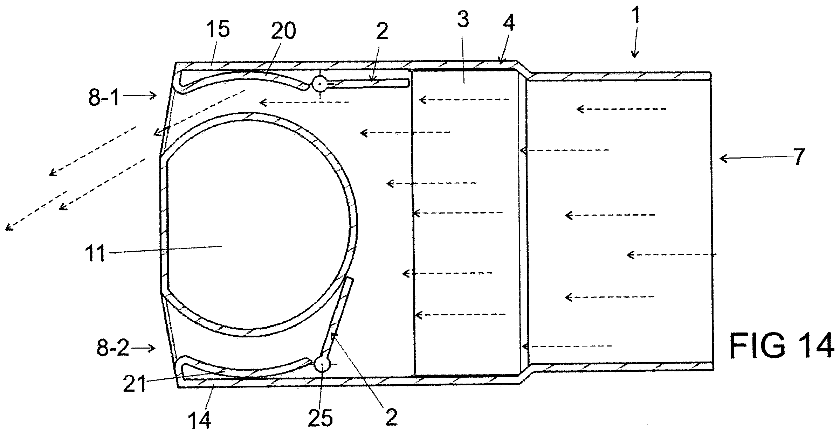

In FIG 14 ist der Luftstrom, der durch den Luftausströmer 1 gemäß FIG 12 geführt wird, mit gestrichelten Pfeilen dargestellt. Der Luftstrom tritt lediglich über die obere Öffnung 8-1 aus. Der Luftstrom, der in den Luftausströmer 1 geleitet wird, ist damit in seiner Orientierung, bedingt durch die Gestaltung der Öffnung 8, in der Weise beeinflusst, dass die Ausrichtung des Luftstromes bei Verschluss der Öffnung 8-2 mittels der Lamelle 6-2 nach unten abgelenkt aus der Öffnung 8-1 austritt.

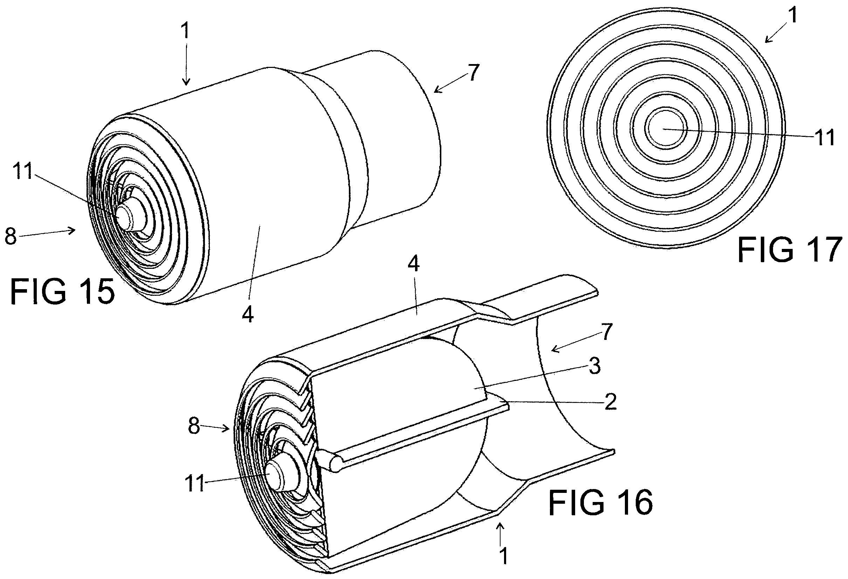

In FIG 15 ist ein runder Luftausströmer 1 dargestellt. Es ist ein Element 11 in der Luftaustrittsöffnung 8 angeordnet. Um dieses Element 11 schließen sich konzentrisch angeordnete feststehende Lamellen an. Das Gehäuse 4 ist als Zylinder mit einer Verjüngung zur Lufteintrittsöffnung 7 ausgebildet.

In FIG 16 ist ein Schnitt durch einen perspektivisch dargestellten Luftausströmer gemäß FIG 15 dargestellt. Es sind die Anordnungen 2 und 3, mittels welcher der Luftstrom in seiner Orientierung beeinflussbar ist, dargestellt. In einer vorteilhaften Ausgestaltung der Erfindung ist die Anordnung 3 eine Lamelle.

In FIG 17 ist eine Draufsicht auf einen Luftausströmer 1 gemäß FIG 15 von vorne dargestellt. Es sind das feststehende Element 11 und die das feststehende Element konzentrisch umgebenden Lamellen dargestellt.

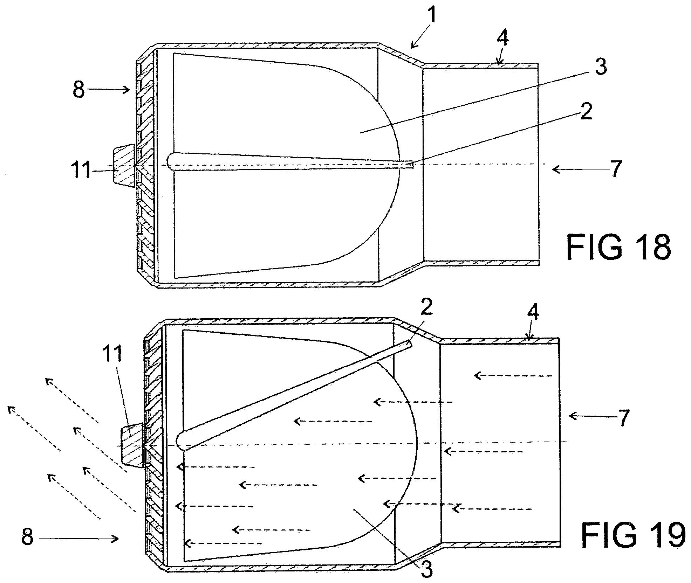

In FIG 18 ist ein Längsschnitt durch den Luftausströmer 1 gemäß FIG 15 dargestellt. Es ist insbesondere die Anordnung 2, die den Luftstrom in seiner Orientierung in der horizontalen Ebene in vertikaler Ablenkung beeinflussen kann, dargestellt.

In FIG 19 ist schematisch der Luftstrom dargestellt, der im Luftausströmer 1 beeinflusst wird und sich gerichtet nach unten aus der Öffnung 8 zum Luftaustritt orientiert. Dies erfolgt, indem der obere Teil der Öffnung 8 durch die Anordnung 2 nahezu verschlossen wird.

### Bezugszeichenliste

- 1: Luftausströmer
- 2, 3: Anordnung
- 4: Gehäuse
- 5: Lamelle
- 6: Lamelle
- 7: Öffnung zur Einleitung eines Luftstromes
- 8: Öffnung zur Ausleitung eines Luftstromes
- 9: Lamellenblock
- 10: Lamellenblock
- 11: Element
- 12: Gehäuseseitenfläche
- 13: Gehäuseseitenfläche
- 14: Gehäuseunterseite
- 15: Gehäuseoberseite
- 16, 17: V-förmiger Verlauf
- 18, 19: feststehende Lamelle
- 20, 21: Innenfläche
- 22: glattflächiger Bereich der Lamellen
- 23: prismaförmiger Bereich der Lamellen
- 24: keilförmiger Bereich der Lamellen
- 25: Gelenk

## Patentansprüche

1. Luftausströmer (1) mit mindestens einer Öffnung (7) zur Zuführung eines Luftstroms und mindestens einer Öffnung (8) zur Ausleitung des zugeführten Luftstroms, mit einer Anordnung (2, 3) zur Führung und/oder Ablenkung und/oder Unterbindung des zugeführten Luftstroms, wobei der Luftstrom dem Luftausströmer (1) aus einem Luftzufuhrschacht oder aus einer Luftzufuhrleitung in Heizungs-, Lüftungs- oder Klimaanlagen, insbesondere für Fahrgasträume in Kraftfahrzeugen, zuführbar ist, wobei der Luftausströmer (1) aus einem Gehäuse (4) besteht, das in einen Wanddurchbruch einsetzbar oder hinter einem solchen montierbar ist, wobei in der Öffnung (8) zur Ausleitung des Luftstromes mindestens ein Element (11) angeordnet ist und die Anordnung (2, 3) zur Führung und/oder Ablenkung und/oder Unterbindung des zugeführten Luftstroms im Innern des Gehäuses (4) hinter dem mindestens einen Element (11) angeordnet ist, wobei eine Gehäuseoberseite (15) und eine Gehäuseunterseite (14) im Bereich (16, 17) der Öffnung (8) V-förmig auslaufen, indem Innenflächen im Bereich der Öffnung (8) in Richtung einer Außenkante der Öffnung (8) ansteigen und dann nach außen abfallen, **dadurch gekennzeichnet, dass** oberhalb und unterhalb, äquidistant zum mindestens einen Element (11) zwei feststehende Lamellen (18, 19) angeordnet sind.

2. Luftausströmer (1) nach Patentanspruch 1, **dadurch gekennzeichnet, dass** das mindestens eine Element (11) starr in der Öffnung (8) zur Ausleitung des Luftstromes angeordnet ist und dass das mindestens eine Element (11) nahezu bündig mit zwei einander gegenüberliegenden, die Öffnung (8) umschließenden Flächen (12, 13) des Gehäuses (4) abschließt.

3. Luftausströmer (1) nach Patentanspruch 1, **dadurch gekennzeichnet, dass** das mindestens eine Element (11) in horizontaler Richtung verschiebbar in der Öffnung (8) zur Ausleitung des Luftstromes angeordnet ist und dass das mindestens eine Element (11) nahezu bündig mit den beiden einander gegenüberliegenden, die Öffnung (8) seitlich umschließenden Seitenflächen (12, 13) des Gehäuses (4) abschließt.

4. Luftausströmer (1) nach einem der vorangehenden Patentansprüche, **dadurch gekennzeichnet, dass** die Anordnung (2, 3) mindestens aus zwei separaten und um einen Winkel gegeneinander versetzt und/oder hintereinander angeordneten Elementen (5, 6) gebildet ist, so dass der aus der Öffnung (8) zur Ausleitung des zugeführten Luftstroms austretende Luftstrom in seiner Strömungsrichtung einstellbar, ablenkbar oder nahezu vollständig unterbindbar ist, wobei die Elemente (5, 6) aus mindestens einer Lamelle oder einem Lamellenblock bestehen, wobei ein Lamellenblock mehrere miteinander gekoppelte Lamellen aufweist und wobei eine jede der miteinander gekoppelten Lamellen eines Lamellenblocks im Lamellenblock derart gelagert ist, dass die Lamellen eines Lamellenblocks gemeinsam um eine Achse verschwenkbar sind.

5. Luftausströmer (1) nach Patentanspruch 1, **dadurch gekennzeichnet, dass** sich der V-förmige Verlauf im Bereich (16, 17) der Öffnung (8) über die gesamte Frontseite des Gehäuses (4) erstreckt.

6. Luftausströmer (1) nach einem der vorangehenden Patentansprüche, **dadurch gekennzeichnet, dass** die Öffnung (8) die Form eines Kreiszylinderabschnittes, konkav zum Innenraum des Gehäuses (4) ausbildet.

7. Luftausströmer (1) nach einem der vorangehenden Patentansprüche, **dadurch gekennzeichnet, dass** das mindestens eine Element (11) eine Lamelle, ein an einer Seite abgeflachter Kreiszylinder oder ein Quader ist.

8. Luftausströmer (1) nach einem der vorangehenden Patentansprüche, **dadurch gekennzeichnet, dass** die zwei feststehenden Lamellen (18, 19) leicht in das Gehäuse (4) zurückgesetzt angeordnet sind.

9. Luftausströmer (1) nach einem der vorangehenden Patentansprüche, **dadurch gekennzeichnet, dass** die Innenflächen (20, 21) der Gehäuseoberseite (15) und der Gehäuseunterseite (14) im Bereich des in der Öffnung (8) angeordneten, mindestens einen Elements (11) die Form des mindestens einen Elements (11) zumindest teilweise aufnehmen.

## Claims

1. Air vent (1) with at least one opening (7) for supply of an air flow and at least one opening (8) for discharge of the supplied air flow, with an arrangement (2, 3) for guidance and/or deflection and/or prevention of the supplied air flow, wherein the air flow can be supplied to the air vent (1) from an air feed shaft or from an air feed duct in heating, ventilating or air-conditioning installations, particularly for passenger compartments in motor vehicles, wherein the air vent (1) consists of a housing (4) insertable in a wall passage or mountable behind such, wherein at least one element (11) is arranged in the opening (8) for discharge of the air flow and the arrangement (2, 3) for guidance and/or deflection and/or preventing the supplied air flow is arranged in the interior of the housing (4) behind the at least one element (11), wherein a housing upper side (15) and a housing lower side (14) run out in V-shape in the region (16, 17) of the opening (8) in that inner surfaces in the region of the opening (8) rise in the direction of an outer edge of the opening (8) and then drop away towards the outside, **characterised in that** two stationary slats (18, 19) are arranged above and below equidistantly from the at least one element (11).

2. Air vent (1) according to claim 1, **characterised in that** the at least one element (11) is rigidly arranged in the opening (8) for discharge of the air flow and that the at least one element (11) is virtually flush with two mutually opposite surfaces (12, 13) of the housing (4) enclosing the opening (8).

3. Air vent (1) according to claim 1, **characterised in that** the at least one element (11) is arranged to be displaceable in horizontal direction in the opening (8) for discharge of the air flow and that the at least one element (11) is virtually flush with the two mutually opposite side surfaces (12, 13) of the housing (4) laterally enclosing the opening (8).

4. Air vent (1) according to any one of the preceding claims, **characterised in that** the arrangement (2, 3) is formed from at least two separate elements (5, 6), which are offset relative to one another by an angle and/or arranged one behind the other, so that in its flow direction the air flow issuing from the opening (8) for discharge of the supplied air flow is settable, deflectable or almost completely preventable, wherein the elements (5, 6) consist of at least one slat or slat block, wherein a slat block comprises a plurality of intercoupled slats and wherein each of the intercoupled slats of a slat block is so mounted in the slat block that the slats of a slat block are pivotable in common about an axis.

5. Air vent (1) according to claim 1, **characterised in that** the V-shaped path in the region (16, 17) of the opening (8) extends over the entire front side of the housing (4).

6. Air vent (1) according to any one of the preceding claims, **characterised in that** the opening (8) has the shape of a section of a circular cylinder concave towards the interior space of the housing (4).

7. Air vent (1) according to any one of the preceding claims, **characterised in that** the at least one element (11) is a slat, a circular cylinder flattened at one side or a block.

8. Air vent (1) according to any one of the preceding claims, **characterised in that** the two stationary slats (18, 19) are arranged to be slightly recessed in the housing (4).

9. Air vent (1) according to any one of the preceding claims, **characterised in that** the inner surfaces (20, 21) of the housing upper side (15) and the housing lower side (14) in the region of the at least one element (11) arranged in the opening (8) at least partly take up the shape of the at least one element (11).

## Revendications

1. Diffuseur d'air (1) comportant au moins une ouverture (7) d'amenée d'un courant d'air et au moins une ouverture (8) de sortie du courant d'air amené, un agencement (2, 3) servant à guider et/ou à dévier et/ou à prévenir le courant d'air amené, dans lequel le courant d'air peut être amené au diffuseur (1) à partir d'un puits d'amenée d'air ou d'une conduite d'amenée d'air dans des systèmes de chauffage, de ventilation ou climatisation, en particulier pour des habitacles de véhicules d'automobile, dans lequel le diffuseur d'air (1) étant constitué d'un boîtier (4) qui peut être installé dans une ouverture de paroi ou monté derrière cette dernière, dans lequel au moins un élément (11) est agencé dans l'ouverture (8) de sortie du courant d'air et l'agencement (2, 3) servant à diriger et/ou à dévier et/ou à prévenir le courant d'air amené étant agencé à l'intérieur du boîtier (4) derrière ledit au moins un élément (11), dans lequel une face supérieure de boîtier (15) et une face inférieure de boîtier (14) terminent en V dans la zone (16, 17) de l'ouverture (8), par le fait que les surfaces intérieures dans la zone de l'ouverture (8) s'élèvent en direction d'un bord extérieur de l'ouverture (8) puis descendent vers l'extérieur, **caractérisé en ce que** dans la partie supérieure et la partie inférieure, deux lamelles (18, 19) fixes sont agencées à équidistance d'au moins un élément (11).

2. Diffuseur d'air (1) selon la revendication 1, **caractérisé en ce que** ledit au moins un élément (11) est agencé fixement dans l'ouverture (8) de sortie du courant d'air et **en ce que** ledit au moins un élément (11) se termine presque en affleurement avec deux surfaces (12, 13) du boîtier (4) opposées l'une à l'autre et entourant l'ouverture (8).

3. Diffuseur d'air (1) selon la revendication 1, **caractérisé en ce que** ledit au moins un élément (11) est agencé dans l'ouverture (8) de sortie du courant d'air de manière à pouvoir se déplacer dans la direction horizontale et **en ce que** ledit au moins un élément (11) se termine presque en affleurement avec les deux surfaces latérales (12, 13) du boîtier (4) opposées l'une à l'autre et entourant latéralement l'ouverture (8).

4. Diffuseur d'air (1) selon l'une quelconque des revendications précédentes, **caractérisé en ce que** l'agencement (2, 3) est formé au moins de deux éléments (5, 6) séparés décalés l'un de l'autre à un certain angle et/ou agencés l'un derrière l'autre, de sorte que le courant d'air sortant de l'ouverture (8) de sortie du courant d'air amené peut être ajusté dans sa direction d'écoulement, dévié ou presque entièrement bloqué, dans lequel les éléments (5, 6) sont constitués d'au moins une lamelle ou d'un bloc de lamelles, dans lequel un bloc de lamelles comprend plusieurs lamelles accouplées les unes aux autres et dans lequel chacune des lamelles accouplées les unes aux autres d'un bloc de lamelles est montée dans le bloc de lamelles de telle sorte que les lamelles d'un bloc de lamelles peuvent pivoter ensemble autour d'un axe.

5. Diffuseur d'air (1) selon la revendication 1, **caractérisé en ce que** le tracé en V dans la zone (16, 17) de l'ouverture (8) s'étend sur toute la face frontale du boîtier (4).

6. Diffuseur d'air (1) selon l'une quelconque des revendications précédentes, **caractérisé en ce que** l'ouverture (8) prend la forme d'une section cylindrique circulaire, de manière concave par rapport à l'espace intérieur du boîtier (4).

7. Diffuseur d'air (1) selon l'une quelconque des revendications précédentes, **caractérisé en ce que** ledit au moins un élément (11) est une lamelle, un cylindre circulaire aplati sur une face ou un parallélépipède.

8. Diffuseur d'air (1) selon l'une quelconque des revendications précédentes, **caractérisé en ce que** les deux lamelles (18, 19) fixes sont agencées en étant légèrement placées en retrait dans le boîtier (4).

9. Diffuseur d'air (1) selon l'une quelconque des revendications précédentes, **caractérisé en ce que** les surfaces intérieures (20, 21) de la face supérieure de boîtier (15) et de la face inférieure de boîtier (14), dans la zone dudit au moins un élément (11) agencé dans l'ouverture (8), reçoivent au moins en partie la forme dudit au moins un élément (11).
